# FASCICULE DE BREVET EUROPEEN

(11) **EP 4 070 479 B1**
(45) Date de publication et mention de la délivrance du brevet: **27.08.2025**
(21) Numéro de dépôt: 20816222.2
(22) Date de dépôt: 03.12.2020
(51) Int. Cl.: H04B 10/032

(54) **RÉSEAU DE COMMUNICATION OPTIQUE PASSIF ET AÉRONEF COMPORTANT LEDIT RÉSEAU**
PASSIVES OPTISCHES KOMMUNIKATIONSNETZ UND FLUGZEUG MIT DIESEM NETZ
PASSIVE OPTICAL COMMUNICATION NETWORK AND AIRCRAFT CONTAINING SAID NETWORK

(30) Priorité: 04.12.2019 FR 1913705
(43) Date de publication de la demande: 12.10.2022
(73) Titulaire: LATELEC, 31500 Toulouse (FR)
(72) Inventeur: TALL, Diarra, 31400 TOULOUSE (FR); REBIERE, Yoann, 31520 RAMONVILLE (FR)
(74) Mandataire: Ipside
(86) Numéro de dépôt international: PCT/EP2020/084527
(87) Numéro de publication internationale: WO 2021/110867

(56) Documents cités:
- CN-A- 109 450 526
- CN-B- 101 895 791
- US-A1- 2018 175 935
- US-A1- 2018 323 875
- CHAND N ET AL: "An approach to reducing SWAP and cost for avionics high-speed optical data networks", MILITARY COMMUNICATIONS CONFERENCE, 2008. MILCOM 2008. IEEE, IEEE, PISCATAWAY, NJ, USA, 16 November 2008 (2008-11-16), pages 1 - 7, XP031407841, ISBN: 978-1-4244-2676-8
- NADARAJAH N ET AL: "Self-protected Ethernet passive optical networks using coarse wavelength division multiplexed transmission", ELECTRONICS LETTERS, IEE STEVENAGE, GB, vol. 41, no. 15, 21 July 2005 (2005-07-21), pages 866 - 867, XP006024851, ISSN: 0013-5194, DOI: 10.1049/EL:20051404

## Description

### Domaine technique de l'invention

L'invention relève du domaine de la télécommunication, notamment du domaine des réseaux de communication optique, et concerne plus particulièrement un réseau de communication optique passif et un aéronef le comportant.

Un réseau de communication optique passif est connu par l'homme du métier sous l'acronyme anglophone PON, pour Passive Optical Network.

L'invention trouve application dans le domaine aéronautique, en particulier pour équiper un aéronef.

### Technique antérieure

Afin d'interconnecter des équipements d'une cabine d'aéronef entre eux à des fins de communication, les aéronefs actuels sont équipés de nombreux et différents câblages formant un réseau de communication dont l'installation et la maintenance peuvent s'avérer complexes.

Les câblages, principalement électriques, sont ainsi généralement installés tout au long de la cabine dans des zones parfois peu accessibles, généralement disposées sous le plancher ou dans le plafond. Ces câblages doivent en outre être parfaitement maintenus et protégés, notamment des agressions susceptibles de les endommager, telles que par exemple des vibrations, des projections de liquide, des hautes températures, des radiations électromagnétiques,....

De plus, chaque équipement distribuant des données à la cabine utilise un câblage spécifique en fonction de l'application souhaitée. Une liaison point à point du câblage depuis les meubles avioniques doit être opérée.

Par ailleurs, lorsqu'une compagnie aérienne doit procéder à un réaménagement de la cabine de l'aéronef, tout ou partie de ces câblages doit être remplacé, induisant des temps de maintenance et des cycles d'immobilisation de l'aéronef importants.

Ces câblages présentent en conséquence un coût important, que ce soit en termes de prix, en termes de temps d'installation, de maintenance, ou encore en termes de poids, le poids impactant le bilan de masse de l'aéronef.

De plus, le réseau tel qu'il est réalisé actuellement dans les aéronefs est peu adaptable aux modifications (par exemple, ajout de nouveaux équipements pour proposer des nouveaux services aux passagers). La topologie physique du réseau est figée.

Des architectures de réseau de communication optique, notamment passif, commencent à voir le jour, remplaçant les câbles par des fibres optiques afin de transmettre les données.

Dans un réseau de communication optique passif, un même terminal de ligne optique, appelé OLT pour « Optical Line Terminal » en anglais, est connecté à plusieurs unités ou terminaux de réseau optique, connus sous l'acronyme anglophone ONU, pour « Optical Network Unit », reliés à des équipements finaux (tels que dispositifs électroniques utilisateurs, par exemple des tablettes numériques). En amont, l'OLT est connecté à un système d'information du type serveur informatique.

Les architectures de réseau de communication optique passif présentent différents types d'architectures de sécurisation connus, notamment suggérés par l'Union Internationale des Télécommunications, dans ses recommandations série G, supplément 51, afin d'éviter toute perte de communication au sein du réseau de communication optique. US 2018/323875 décrit un exemple d'architecture de réseau de communication optique passif. Un autre exemple d'architecture de réseau de communication optique passif est également présenté dans « An approach to reducing SWAP and cost for avionics high-speed optical data networks » de Chand N et al, Military Communications Conference, 2008, MILCOM 2008. IEEE, Piscataway, NJ, USA, 16 novembre 2008, pages 1-7, XP031407841.

Notamment, les architectures de sécurisation consistent à dupliquer une partie de l'infrastructure d'un réseau de communication optique passif, plus particulièrement les OLT et/ou les ONU et leurs liens au sein d'un réseau de communication optique passif. Une seule partie des OLT et ONU est active lors du fonctionnement nominal du réseau de communication optique passif, la deuxième partie étant en attente et ne prenant le relais qu'en cas de défaillance de la première.

Ces architectures de sécurisation sont par conséquent complexes et couteûses à mettre en œuvre du fait du nombre de composants à considérer dans le réseau de communication optique passif. Par ailleurs, ces solutions sont également énergivores.

Ces architectures de sécurisation présentent donc des inconvénients rendant ces architectures de sécurisation difficilement adaptables aux contraintes propres au domaine aéronautique.

De plus, dans de telles architectures, la capacité du réseau de communication optique passif est sous-utilisée car toute la partie de l'infrastructure dupliquée n'est pas exploitée alors que les besoins passagers en bande-passante et en performances ne cessent de croitre, par exemple pour satisfaire des besoins de divertissement et/ou de communication.

### Présentation de l'invention

Un objectif de la présente invention est de proposer une architecture de sécurisation optimisée d'un réseau de communication optique passif qui garantit la robustesse à une panne d'un composant dudit réseau tout en permettant une meilleure exploitation de l'infrastructure du réseau, notamment une optimisation de sa bande-passante.

À cet effet, l'invention concerne un réseau de communication optique passif configuré pour être embarqué dans un moyen de transport et destiné à la transmission de données vers des équipements utilisateurs dans un sens dit du flux descendant. Ledit réseau de communication optique passif comprend :
- un premier et un second terminal de ligne optique respectivement destinés à recevoir un même signal de communication, dit signal de communication entrant, de la part de systèmes d'informations distincts susceptibles de délivrer une même information, lesdits premier et second terminaux de ligne étant chacun configurés pour convertir le signal de communication entrant reçu en un même signal optique, de longueur d'onde λ₁, dit signal optique entrant;
- au moins deux commutateurs optiques,
   le premier terminal de ligne optique étant couplé, via une première fibre optique, aux au moins deux commutateurs, et le second terminal de ligne étant couplé, via une seconde fibre optique, aux au moins deux commutateurs,
   une partie des commutateurs étant reliée en entrée au premier terminal de ligne optique par une voie dite principale de fonctionnement nominal et au second terminal de ligne optique par une voie dite secondaire, l'autre partie des commutateurs étant reliée en entrée au second terminal de ligne optique par une voie dite principale de fonctionnement nominal et au premier terminal de ligne optique par une voie dite secondaire,
   chaque commutateur étant relié en sortie à au moins une unité de réseau optique ;
- au moins deux unités de réseau optique, chaque unité de réseau optique étant configurée pour reconvertir le signal optique entrant reçu, de longueur d'onde λ₁, en signal de communication entrant, et étant destinées à le transmettre à des équipements utilisateurs,
- un module de contrôle-commande connecté aux au moins deux commutateurs et configuré pour piloter lesdits au moins deux commutateurs,

Le réseau de communication optique passif étant configuré de telle sorte que, en fonctionnement normal, chaque commutateur reçoit en voie principale et en voie secondaire, le même signal optique entrant, de longueur d'onde λ₁, et chaque commutateur est configuré pour adresser le signal optique entrant provenant de la voie principale à la au moins une unité de réseau optique à laquelle il est connecté.

Le réseau de communication optique passif selon l'invention est, en d'autres termes, avantageusement configuré pour que, en fonctionnement normal, les premier et second terminaux de ligne optique transmettent tous les deux un même signal optique entrant aux mêmes commutateurs, mais seul le signal optique entrant provenant de la voie principale est transmis par les commutateurs aux unités de réseau optique.

Le réseau de communication optique passif est en outre configuré pour que en cas de défaillance rompant la transmission du signal optique entrant sur la première fibre optique, ledit module de contrôle-commande est configuré pour provoquer le basculement du ou des commutateurs configuré(s) pour adresser le signal optique entrant, transmis par la première fibre optique, provenant de la voie principale afin que ledit ou lesdits commutateurs adressent le signal optique entrant provenant de la voie secondaire à la au moins une unité de réseau optique à laquelle il est ou ils sont connectés.

Ainsi, malgré une défaillance sur une voie principale, la communication entre les systèmes d'informations et les unités de réseau optique est préservée.

Le réseau de communication optique passif est donc robuste aux défaillances de voie principale et/ou de terminal de ligne optique. Cette robustesse est notamment garantie grâce à la duplication desdits terminaux de ligne optique.

Grâce aux commutateurs, chaque terminal de ligne optique communique individuellement avec une partie, par exemple la moitié, de l'ensemble des unités de réseau optique alors que dans les architectures des réseaux de communication de l'état de la technique, le terminal de ligne optique communique avec la totalité des unités de réseau optique.

Ainsi, dans le réseau de communication optique passif selon l'invention, en fonctionnement nominal (ou normal), la bande passante de chacun des terminaux de ligne optique n'est allouée qu'à une partie de l'ensemble des unités de réseau optique, de sorte que du point de vue des unités de réseau optique, cela se traduit par une augmentation de la bande passante disponible, au regard des architectures de réseaux de communication selon l'état de la technique.

L'architecture du réseau de communication optique passif selon l'invention permet également de remettre en service les communications du réseau dans un intervalle de temps très faible à la suite d'une panne.

Typiquement, cet intervalle de temps correspond au basculement du commutateur.

Par exemple, suite à une défaillance détectée, les commutateurs basculent automatiquement, par exemple de l'ordre de 2ms.

Un autre avantage de la présente invention est l'optimisation de l'exploitation des ressources du réseau de communication optique passif.

En effet, les terminaux de ligne optique sont tous deux actifs et communiquent en même temps, chaque unité de réseau optique communiquant avec l'un ou l'autre desdits terminaux de ligne optique via un commutateur.

Dans des modes particuliers de réalisation, l'invention répond en outre aux caractéristiques suivantes, mises en œuvre séparément ou en chacune de leurs combinaisons techniquement opérantes.

Dans des exemples de réalisation, les commutateurs sont des commutateurs optiques, de type MEMS.

Dans des modes particuliers de réalisation, le réseau de communication optique passif est configuré de sorte que, en cas de défaillance rompant la transmission du signal optique entrant sur la seconde fibre optique, ledit module de contrôle-commande est configuré pour provoquer le basculement du ou des commutateurs configuré(s) pour adresser le signal optique entrant transmis par la seconde fibre optique provenant de la voie principale afin que ledit ou lesdits commutateurs adressent le signal optique entrant provenant de la voie secondaire à la au moins une unité de réseau optique à laquelle il est ou ils sont connectés.

Dans des modes particuliers de réalisation de l'invention, le nombre de commutateur(s) optique(s) relié(s) en entrée au premier terminal de ligne optique par la voie principale de fonctionnement nominal et au second terminal de ligne optique par la voie secondaire, est identique au nombre de commutateur(s) optique(s) relié(s) en entrée au second terminal de ligne optique par la voie principale de fonctionnement nominal et au premier terminal de ligne optique par la voie secondaire.

Dans des modes particuliers de réalisation de l'invention, les systèmes d'informations distincts peuvent être deux serveurs identiques.

Dans des modes particuliers de réalisation de l'invention, les terminaux de ligne optique sont en liaison de communication l'un avec l'autre de sorte que chaque terminal de ligne optique puisse identifier toute défaillance de l'autre terminal de ligne optique.

Dans des modes particuliers de réalisation de l'invention, le module de contrôle-commande est configuré de sorte que, dans le cas d'une défaillance d'un terminal de ligne optique, il entraîne le basculement de l'ensemble des commutateurs auquel ledit terminal est relié par la voie principale.

Dans des modes particuliers de réalisation de l'invention, chaque commutateur est relié à au moins deux unités de réseau optique par le biais d'un coupleur.

Un autre objet de la présente invention concerne un aéronef dans lequel est embarqué un réseau de communication optique passif. Ledit aéronef comporte un système d'informations doté de plusieurs serveurs informatiques fonctionnant par paires, les serveurs de chaque paire étant respectivement associés à l'un des terminaux de ligne optique du réseau de communication optique passif.

### Brève description des figures

L'invention sera mieux comprise à la lecture de la description suivante, donnée à titre d'exemple nullement limitatif, et faite en se référant aux figures qui représentent schématiquement :
La figure 1 est un exemple de réalisation d'un réseau de communication optique passif selon la présente invention ;
La figure 2 est une variante de réalisation du réseau de communication optique passif de la figure 1.

Dans ces figures, des références numériques identiques d'une figure à l'autre désignent des éléments identiques ou analogues.

### Description des modes de réalisation

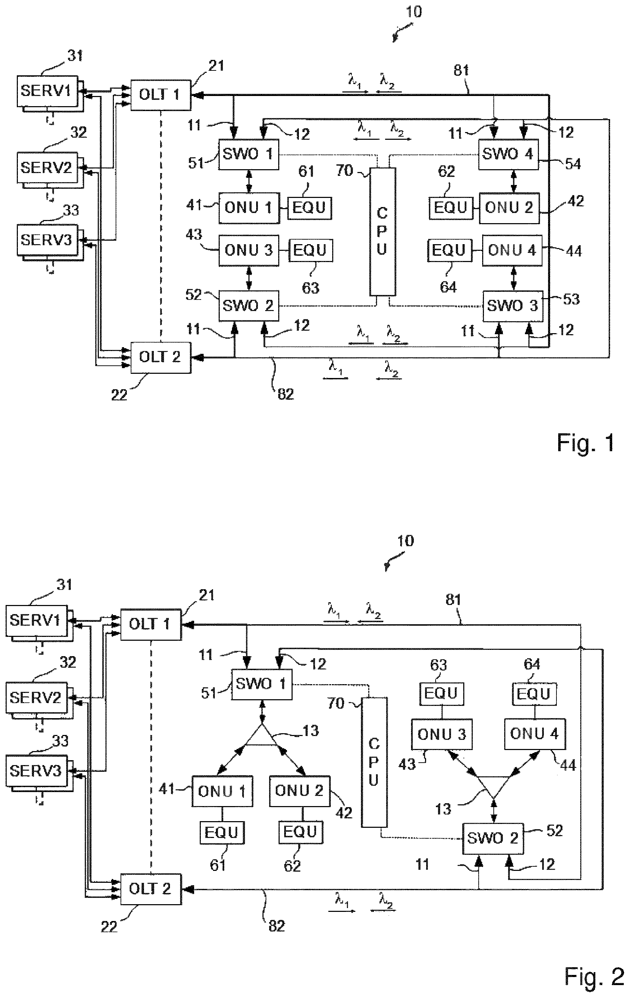

La présente invention concerne un réseau de communication optique passif 10 tel que représenté schématiquement sur la figure 1 dans un exemple de réalisation.

Le réseau de communication optique passif 10 peut, de manière générale, équiper tout moyen de transport, notamment ceux des domaines aéronautique, ferroviaire ou automobile, sans que cela soit restrictif de l'invention.

La présente invention s'intègre préférentiellement dans le domaine de l'aéronautique et sera décrite ci-après dans le contexte particulier, non limitatif, dans lequel le réseau de communication optique passif 10 est destiné à être utilisé dans un aéronef.

Le réseau de communication optique passif 10 est destinée à permettre une transmission de données vers et depuis des équipements utilisateurs 61, 62, 63, 64.

Les équipements utilisateurs 61, 62, 63, 64 peuvent être de diverses natures :
- des terminaux (écrans fixes), par exemple intégrés dans des sièges passagers de l'aéronef,
- des équipements électroniques personnels, connus sous l'acronyme PED (« personal electronic device » en terminologie anglaise), appartenant par exemple aux passagers de l'aéronef,
- des équipements techniques critiques et non critiques pour le vol (actionneurs de pompes, détecteurs de température ou de pression, détecteurs de fumée, etc.).

Le réseau de communication optique passif 10 selon l'invention comporte deux terminaux de ligne optique 21 et 22, connus sous l'acronyme « OLT » pour « Optical Line terminal » en anglais. Les deux terminaux de ligne optique sont dits respectivement premier 21 et second 22 terminal de ligne optique. Chaque terminal de ligne optique 21 et 22 est destiné à recevoir un signal de communication, dit premier signal de communication ou signal de communication entrant, par exemple un signal électrique, de la part de systèmes d'informations 31, 32, 33.

De tels systèmes d'informations 31, 32, 33 peuvent être des serveurs informatiques, préférentiellement des paires de serveurs informatiques. De préférence, chaque paire de serveur informatique regroupe et gère des données relatives à un service spécifique dans l'aéronef. Par exemple, les systèmes d'informations sont trois paires de serveurs informatiques respectivement destinées à la gestion du divertissement en vol, la gestion des organes cabine et la gestion de la communication vers l'extérieur de l'aéronef.

Préférentiellement, les terminaux de ligne optique 21 et 22 sont reliés à des serveurs distincts susceptibles de délivrer la même information. Plus précisément, comme le montrent les figures 1 et 2, les serveurs informatiques de chaque paire sont respectivement associés à l'un des terminaux de ligne optique 21 et 22 et les serveurs de chaque paire sont reliés l'un à l'autre. Ainsi, la même information est susceptible d'être transmise aux deux terminaux de ligne optique 21 et 22.

De préférence, les terminaux de ligne optique 21, 22 sont identiques.

Le réseau de communication optique passif 10 permet avantageusement la distribution, de flux descendants et de flux montants de données, respectivement dans et à partir des équipements utilisateurs 61, 62, 63, 64.

Les flux descendants permettent aux équipements utilisateurs d'exploiter les données provenant desdits systèmes d'informations et les flux montants permettent de transférer des données auxdits systèmes d'informations à partir desdits équipements utilisateurs.

Les figures 1 et 2 représentent un réseau de communication optique passif 10 pour une communication des données dans le sens du flux descendant et du flux ascendant.

Les terminaux de ligne optique 21, 22 sont chacun configurés pour, dans le sens du flux descendant, convertir le signal de communication entrant provenant des systèmes d'information en un même signal optique, de longueur d'onde λ₁, dit signal optique entrant.

Le réseau de communication optique passif 10 comporte en outre au moins deux commutateurs 51, 52 et au moins deux unités de réseau optique 41, 43, connus sous l'acronyme « ONU », pour « Optical Network Unit » en anglais.

De préférence, les commutateurs 51, 52 sont identiques.

De préférence, les unités de réseau optique 41, 43 sont identiques.

Chaque terminal de ligne optique 21, 22 est relié aux divers équipements utilisateurs 61, 62, 63, 64 via les commutateurs 51, 52 et les unités de réseau optique 41, 43. Les deux terminaux de ligne optique 21, 22 sont préférentiellement reliés aux mêmes équipements utilisateurs, via les mêmes commutateurs 51, 52 et les mêmes unités de réseau optique 41, 43.

Le premier terminal de ligne optique 21 est couplé à chaque commutateur par une première fibre optique 81. Ladite première fibre optique dessert successivement les au moins deux commutateurs 51, 52.

Le second terminal de ligne optique 22 est couplé à chaque commutateur par une seconde fibre optique 82. Ladite seconde fibre optique dessert successivement les au moins deux commutateurs 51, 52.

Dans un exemple de réalisation, les deux fibres optiques 81, 82 sont préférentiellement monomodes. Cependant, rien n'exclut d'avoir recours à des fibres optiques multimodes. De préférence, les fibres optiques sont identiques.

Chaque commutateur est couplé à au moins une unité de réseau optique. Dans l'exemple de réalisation de la figure 1, chaque commutateur est couplé à une unité de réseau optique. Dans l'exemple de réalisation de la figure 2, chaque commutateur est couplé à deux unités de réseau optique.

Chaque unité de réseau optique est couplée respectivement à au moins un équipement utilisateur 61, 62, 63, 64.

Dans l'exemple de réalisation représenté sur la figure 1, le réseau de communication optique passif 10 comporte quatre unités de réseau optique 41, 42, 43, 44.

Dans d'autres exemples de réalisation non représentés sur les figures, le réseau de communication optique passif 10 peut comporter plus de quatre unités de réseau optique, indifféremment en nombre pair ou impair.

Le nombre d'unité de réseau optique est choisi selon le niveau de répartition de la bande passante désirée.

Dans l'exemple non limitatif de la figure 1, le réseau de communication optique passif 10 comporte quatre commutateurs, 51, 52, 53, 54. Le terme « commutateur » désigne dans le présent texte un commutateur optique et est également connu par l'homme du métier sous la dénomination anglophone « switch ». Comme visible sur la figure 1, chaque commutateur 51 à 54 est connecté en entrée aux deux terminaux de ligne optique 21, 22 et en sortie à une unité de réseau optique 41 à 44. Dans cet exemple de réalisation non limitatif de l'invention, le réseau de communication optique passif 10 comporte autant de commutateurs que d'unités de réseau optique.

Ces commutateurs 51 à 54 sont des commutateurs optiques. Ils présentent l'avantage de consommer une faible quantité d'énergie et ce seulement lors de leur basculement comme décrit ci-après.

Plus précisément, les deux terminaux de ligne optique 21 et 22 sont reliés, respectivement par la première fibre optique 81 et la seconde fibre optique 82, à chaque commutateur 51 à 54, soit par une voie principale 11 de fonctionnement nominal associée à un port principal d'un ou de commutateurs 51 à 54, soit par une voie secondaire 12 associée à un port secondaire d'un ou de commutateurs 51 à 54.

Dans l'exemple de réalisation non limitatif représenté sur la figure 1, les commutateurs 51 et 54 sont reliés en entrée au premier terminal de ligne optique 21 par une voie principale 11 et à un second terminal de ligne optique 22 par une voie secondaire 12. Les commutateurs 52 et 53 sont reliées en entrée au second terminal de ligne optique 22 par une voie principale 11 et au premier terminal de ligne optique 21 par une voie secondaire 12.

Les voies principale 11 et secondaire 12 sont constituées par les fibres optiques. En d'autres termes, la première fibre optique 81 forme la voie principale d'accès pour les commutateurs 51 et 54 et la voie secondaire d'accès pour les commutateurs 52 et 53. La seconde fibre optique 82 forme la voie principale d'accès pour les commutateurs 52 et 53 et la voie secondaire d'accès pour les commutateurs 51 et 54.

En mode de fonctionnement nominal, c'est-à-dire en l'absence de défaillance du réseau de communication optique passif 10, la communication entre chaque terminal de ligne optique 21 et 22 et respectivement les commutateurs 51, 54, et 52, 53, est établie selon la voie principale 11. La voie secondaire 12 est destinée à être utilisée en cas de défaillance de la communication sur la voie principale 11 comme décrit plus en détail ci-après.

Dans le réseau de communication optique passif 10 selon l'invention, chacun des terminaux de ligne optique 21 et 22 étant connecté à un certain nombre de commutateurs par la voie principale 11, et à un certain nombre d'autres par la voie secondaire 12, en mode de fonctionnement nominal, la charge des unités de réseau optique 41 à 44 est répartie entre les deux terminaux de ligne optique 21, 22. La bande passante allouée à chaque unité de réseau optique 41 à 44 est ainsi augmentée.

Préférentiellement, chaque terminal de ligne optique 21, 22 est relié à un même nombre de commutateurs par voies principales 11 que par voies secondaires 12, comme l'illustre la figure 1. Autrement dit, en mode de fonctionnement nominal, chaque terminal de ligne optique 21, 22 communique avec un même nombre d'unités de réseau optique 41, 42, 43, 44.

Ainsi, la répartition de la charge des unités de réseau optique 41, 42, 43, 44 est identique pour les deux terminaux de ligne optique 21 et 22.

Le réseau de communication optique passif 10 comporte un module de contrôle-commande 70. Chaque commutateur 51 à 54 est connecté au module de contrôle-commande 70. Ledit module de contrôle-commande est préférentiellement adapté à détecter une défaillance rompant la transmission du signal sur la voie principale 11.

Une telle défaillance peut intervenir suite à un défaut d'un des terminaux de ligne optique 21 ou 22. Elle peut également intervenir suite à une cassure d'une des deux fibres optiques 81, 82. Une telle défaillance se traduit par une absence de transmission du signal de communication entrant provenant des systèmes d'information.

Le module de contrôle-commande 70 peut être interne aux terminaux de ligne optique 21, 22, et/ou aux commutateurs 51 à 54, et/ou aux unités de réseau optique 41 à 44, ou être un module individuel indépendant tel qu'un ordinateur.

Le module de contrôle-commande 70 est configuré pour piloter les commutateurs 51 à 54 de sorte que lorsqu'une défaillance est détectée sur la voie principale 11 associée à un commutateur 51, 52, 53 ou 54, il provoque le basculement dudit commutateur afin d'adresser le signal provenant de la voie secondaire 12 associée à ce commutateur à l'unité de réseau optique 41, 42, 43 ou 44 à laquelle ledit commutateur connecté.

Plus particulièrement, le module de contrôle-commande 70 est configuré de sorte que, dans le cas d'une défaillance d'une voie principale 11, et plus particulièrement de la fibre optique formant la voie principale 11 d'un ou de commutateurs, ledit module de contrôle-commande 70 entraîne uniquement le basculement dudit ou desdits commutateurs.

En outre, le module de contrôle-commande 70 est configuré de sorte que, dans le cas d'une défaillance d'un terminal de ligne optique 21 ou 22, il entraîne le basculement de l'ensemble du ou des commutateurs 51, 52, 53 ou 54 au(x)quel(s) ledit terminal de ligne optique 21 ou 22 est relié par voie principale 11. Le signal de communication entrant est alors transmis par l'autre terminal de ligne optique 21 ou 22 relié par la voie secondaire 12 aux commutateurs 51, 52, 53 ou 54 ayant basculé.

Les serveurs de chaque paire étant reliés l'un à l'autre, la même information que celle transmise à l'unité de réseau optique 41 à 44 par voie principale 11 peut également l'être par la voie secondaire 12 desdits commutateurs.

Ainsi, en cas d'échec de la communication via la voie principale 11 d'un ou de connecteurs à cause d'une défaillance d'un terminal de ligne optique 21 ou 22 ou d'une fibre optique, le ou les commutateurs 51 à 54 permettent un rétablissement de la communication via la voie secondaire 12 desdits commutateurs reliée à l'autre terminal 21 ou 22.

En outre, les terminaux de ligne optique 21 et 22 sont préférentiellement reliés l'un à l'autre de sorte à pouvoir communiquer ensemble. Chaque terminal de ligne optique 21, 22 est donc apte à déterminer lorsque l'autre terminal de ligne optique 21, 22 est défaillant et est capable de reprendre les communications du terminal de ligne optique 21, 22 défaillant.

La présente invention a donc pour avantage d'assurer la communication au sein du réseau de communication optique passif 10 malgré une défaillance d'un terminal de ligne optique 21, 22 et/ou d'une voie principale 11 d'un commutateur 51 à 54 relié à un terminal de ligne optique 21, 22.

Dans une variante de réalisation dont un exemple est représenté sur la figure 2, le réseau de communication optique passif 10 comporte deux coupleurs 13 reliant respectivement un commutateur 51, 52 à au moins quatre unités de réseau optique 41, 42, 43, 44.

Plusieurs unités de réseau optique 41 à 44 sont donc connectées à un même commutateur 51 à 54.

De préférence, le coupleur est un coupleur optique.

Dans l'exemple de la figure 2, le coupleur est un coupleur 1x2.

L'intégration d'un coupleur permet avantageusement de diminuer le nombre de commutateur au sein du réseau de communication optique passif 10.

Le réseau de communication optique passif 10 va être à présent décrit de manière détaillée dans l'exemple de réalisation non limitatif illustré par la figure 1, où les commutateurs sont au nombre de quatre, et chaque commutateur dessert une unité de réseau optique. Bien évidemment, il est possible, sans se départir du cadre de l'invention, de recourir à moins de, ou plus de, quatre commutateurs. De même, chaque commutateur peut desservir plus d'une unité de réseau optique.

Le rôle et le fonctionnement des différents éléments composant le réseau de communication optique passif 10 sera décrit dans un premier temps pour une transmission de données dans le sens d'un flux descendant (des systèmes d'information vers les équipements utilisateurs), comme illustré sur la figure 1, et dans un second temps, pour une transmission de données dans le sens d'un flux montant (des équipements utilisateurs vers les systèmes d'informations).

### Sens du flux descendant

Chaque terminal de ligne optique 21, 22 est agencé et configuré pour recevoir un signal de communication, dit signal de communication entrant, de préférence électrique. Chaque terminal de ligne optique est configuré pour, dans le sens du flux descendant, convertir le signal de communication entrant reçu en un signal optique, de longueur d'onde λ₁, dit signal optique entrant. Le signal de communication entrant reçu par chaque terminal de ligne optique étant préférentiellement le même, le signal optique entrant, de longueur d'onde λ₁, en sortie de chaque terminal de ligne optique 21, 22 est le même.

En sortie du premier terminal de ligne 21, le signal optique entrant, de longueur d'onde λ₁, est transmis, via la première fibre optique 81, à chaque commutateur 51, 52, 53, 54.

En sortie du second terminal de ligne 21, le signal optique entrant, de longueur d'onde λ₁, est transmis, via la seconde fibre optique 81, à chaque commutateur 51, 52, 53, 54.

Les longueurs d'onde des signaux optiques entrants dans chaque fibre optique 81, 82 sont préférentiellement choisies de sorte à être identiques. Un tel choix permet avantageusement d'utiliser des terminaux de ligne optique identiques.

De manière non limitative, les commutateurs 51 et 54 sont reliés en entrée au premier terminal de ligne optique 21 par la voie principale et au second terminal de ligne optique 22 par la voie secondaire. Les commutateurs 52 et 53 sont reliés en entrée au premier terminal de ligne optique 21 par la voie secondaire et au second terminal de ligne optique 22 par la voie principale.

Chaque commutateur 51 à 54 est configuré pour recevoir, au niveau de chacune de ces entrées, le même signal optique entrant, de longueur d'onde λ₁, provenant de la première fibre optique 81 et de la seconde fibre optique 82, et pour transmettre le signal optique entrant à l'unité de réseau optique. En fonctionnement nominal, chaque commutateur 51 à 54 est configuré pour adresser le signal optique entrant provenant de la voie principale à l'unité de réseau optique à laquelle il est associé.

Chaque unité de réseau optique 41 à 44 est configurée pour reconvertir le signal optique entrant, de longueur d'onde λ₁, en signal de communication entrant. Le signal de communication entrant est ensuite transmis à l'équipement utilisateur associé.

Chaque équipement utilisateur reçoit ainsi le même signal de communication entrant, ayant transité soit par le premier ou le second terminal de ligne optique.

Le réseau de communication optique passif 10 est configuré de telle sorte que :
- En fonctionnement nominal (ou normal), chaque commutateur 51 à 54 reçoit en voie principale et en voie secondaire, le même signal optique entrant, de longueur d'onde λ₁, et chaque commutateur 51 à 54 est configuré pour adresser uniquement le signal optique entrant provenant de la voie principale à l'unité de réseau optique à laquelle il est associé ; en d'autres termes, les signaux optiques provenant des premier et second terminaux de ligne optique sont acheminés à chaque commutateur, de préférence simultanément, mais seul le signal optique entrant provenant de la voie principale est transmis par le commutateur,
- En cas de défaillance rompant la transmission du signal optique entrant sur la première fibre optique 81, ledit module de contrôle-commande 70 est configuré pour provoquer le basculement des commutateurs 51, 54 configurés pour adresser le signal optique entrant, transmis par la première fibre optique 81, provenant de la voie principale 11 afin que lesdits commutateurs adressent le signal optique entrant provenant de la voie secondaire 12 (i.e. transmis par la seconde fibre optique) aux unités de réseau optique 41, 42 à laquelle ils sont connectés.

Le réseau de communication optique passif 10 est en outre configuré de telle sorte que en cas de défaillance rompant la transmission du signal optique entrant sur la seconde fibre optique 82, ledit module de contrôle-commande 70 est configuré pour provoquer le basculement des commutateurs 52, 53 configurés pour adresser le signal optique entrant transmis par la seconde fibre optique 82, provenant de la voie principale 11, afin que lesdits commutateurs adressent le signal optique entrant provenant de la voie secondaire 12 (i.e. transmis par la première fibre optique) aux unités de réseau optique 43, 44 à laquelle ils sont connectés.

Ainsi, le réseau de communication optique passif 10 permet, dans le sens du flux descendant, de transmettre un même signal de communication entrant, provenant de systèmes d'information, à des équipements utilisateurs, même lors d'une défaillance rompant la transmission d'un signal optique sur l'une ou l'autres des fibres optiques 81, 82.

### Sens du flux montant

Un signal de communication, dit deuxième signal de communication ou signal de communication sortant, provenant d'un équipement utilisateur est transmis à une unité de réseau optique.

L'exemple de réalisation sera décrit, de manière non limitative, pour l'équipement utilisateur 61. Par analogie, l'exemple s'applique de manière identique à tout autre équipement.

L'unité de réseau optique 41 est configurée pour convertir le signal de communication sortant en un signal optique, de longueur d'onde λ₂, dit signal optique sortant. Le signal optique sortant est ensuite transmis à un commutateur 51.

De préférence, la longueur d'onde λ₂ du signal optique sortant est distincte de la longueur d'onde λ₁ du signal optique entrant, notamment lorsque les fibres optiques 81, 82 sont des fibres optiques monomodes.

Le commutateur est configuré pour recevoir le signal optique sortant, de longueur d'onde λ₂, provenant de l'unité de réseau optique et pour transmettre ledit signal optique sortant à un terminal de ligne optique. En fonctionnement nominal, chaque commutateur est configuré pour adresser le signal optique sortant par la voie principale au terminal de ligne optique. Dans l'exemple du commutateur 51, ledit commutateur est configuré pour adresser le signal optique sortant au premier terminal de ligne optique 21, par la première fibre optique 81.

Chaque terminal de ligne optique est configuré pour, dans le sens du flux montant, reconvertir le signal optique sortant de longueur d'onde λ₂, en signal de communication sortant. Le signal de communication sortant est ensuite transmis au système d'information à qui est destiné ledit signal de communication.

Le réseau de communication optique passif 10 est configuré de telle sorte que :
- en fonctionnement nominal (ou normal), chaque commutateur 51 à 54 est configuré pour adresser le signal optique sortant (provenant d'une unité de réseau optique) par la voie principale au terminal de ligne optique 21, 22 auquel il est associé,
- en cas de défaillance rompant la transmission du signal optique sortant sur la première fibre optique 81, ledit module de contrôle-commande 70 est configuré pour provoquer le basculement des commutateurs configurés initialement pour adresser le signal optique sortant par la voie principale 11 afin que lesdits commutateurs adressent le signal optique sortant par la voie secondaire 12 (i.e. transmettre le signal optique sortant par la seconde fibre optique) au second terminal de ligne optique 22.

Le réseau de communication optique passif 10 est en outre configuré de telle sorte que en cas de défaillance rompant la transmission du signal optique sortant sur la seconde fibre optique 82, ledit module de contrôle-commande 70 est configuré pour provoquer le basculement des commutateurs configurés initialement pour adresser le signal optique sortant par la voie principale 11, afin que lesdits commutateurs adressent le signal optique sortant par la voie secondaire 12 (i.e. transmettre le signal optique sortant par la première fibre optique) au premier terminal de ligne optique 21.

Ainsi, le réseau de communication optique passif 10 permet, dans le sens du flux montant, de transmettre un même signal de communication sortant, provenant d'équipements utilisateurs, à des systèmes d'information à qui ce signal de communication sortant est destiné, même lors d'une défaillance rompant la transmission d'un signal optique sortant sur l'une ou l'autres des fibres optiques.

Le réseau de communication optique passif 10 selon l'invention peut avantageusement être embarqué dans un aéronef comportant un système d'informations doté de plusieurs serveurs informatiques tels que décrits précédemment.

De manière plus générale, il est à noter que les modes de mise en œuvre et de réalisation de l'invention considérés ci-dessus ont été décrits à titre d'exemples non limitatifs et que d'autres variantes sont par conséquent envisageables.

Notamment, il peut être envisagé de combiner l'exemple de réalisation et la variante de réalisation de l'invention décrits ci-avant et respectivement représentés sur les figures 1 et 2, de sorte que le réseau de communication optique passif 10 comporte un ou des commutateurs reliés à des coupleurs 13 et un ou des commutateurs reliés directement à des unités de réseau optique.

## Revendications

1. Réseau de communication optique passif (10) configuré pour être embarqué dans un moyen de transport et destiné à la transmission de données vers des équipements utilisateurs (61, 62, 63, 64), dans un sens dit du flux descendant, comprenant :
- un premier et un second terminal de ligne optique (21, 22) respectivement destinés à recevoir un même signal de communication, dit signal de communication entrant, de la part de systèmes d'informations (31, 32, 33) distincts susceptibles de délivrer une même information, lesdits premier et second terminaux de ligne étant chacun configurés pour convertir le signal de communication reçu en un même signal optique, de longueur d'onde λ₁, dit signal optique entrant,
- au moins deux commutateurs (51, 52),
Le premier terminal de ligne optique (21) étant couplé, via une première fibre optique (81), aux au moins deux commutateurs (51, 52), et le second terminal de ligne (22) étant couplé, via une seconde fibre optique (82), aux au moins deux commutateurs (51, 52),
une partie des commutateurs (51) étant reliée en entrée au premier terminal de ligne optique (21) par une voie dite principale (11), via la première fibre optique (81), et au second terminal de ligne optique (22) par une voie dite secondaire (12), via la seconde fibre optique (82),
l'autre partie des commutateurs (52) étant reliée en entrée au second terminal de ligne optique (22) par une voie dite principale (11), via la seconde fibre optique (82), et au premier terminal de ligne optique (21) par une voie dite secondaire (12), via la première fibre optique (81),
chaque commutateur (51, 52) étant relié en sortie à au moins une unité de réseau optique (41, 42),
- au moins deux unités de réseau optique (41, 43), chaque unité de réseau optique étant configurée pour reconvertir le signal optique entrant reçu, de longueur d'onde λ₁, en signal de communication entrant, et étant destinée à le transmettre à des équipements utilisateurs (61, 62, 63, 64),
- un module de contrôle-commande (70) connecté aux au moins deux commutateurs (51, 52), et configuré pour piloter lesdits au moins deux commutateurs (51, 52),
Le réseau de communication optique passif étant configuré de telle sorte que :
- En fonctionnement normal, chaque commutateur (51, 52) reçoit en voie principale et en voie secondaire, le même signal optique entrant, de longueur d'onde λ₁, et chaque commutateur (51, 52) est configuré pour adresser le signal optique entrant provenant de la voie principale à la au moins une unité de réseau optique à laquelle il est connecté,
- En cas de défaillance rompant la transmission du signal optique entrant sur la première fibre optique (81), ledit module de contrôle-commande (70) est configuré pour provoquer le basculement du ou des commutateurs (51, 52) configuré(s) pour adresser le signal optique entrant, transmis par la première fibre optique (81), provenant de la voie principale (11) afin que ledit ou lesdits commutateurs (51, 52) adressent le signal optique entrant provenant de la voie secondaire (12), c'est-à-dire transmis par la seconde fibre optique (82), à la au moins une unité de réseau optique (41, 42) à laquelle il est ou ils sont connectés.

2. Réseau de communication optique passif (10) selon la revendication 1, configuré de sorte que, en cas de défaillance rompant la transmission du signal optique entrant sur la seconde fibre optique (82), ledit module de contrôle-commande (70) est configuré pour provoquer le basculement du ou des commutateurs (51, 52) configuré(s) pour adresser le signal optique entrant transmis par la seconde fibre optique (82) provenant de la voie principale (11) afin que ledit ou lesdits commutateurs (51, 52) adressent le signal optique entrant provenant de la voie secondaire (12), c'est-à-dire transmis par la première fibre optique (81), à la au moins une unité de réseau optique (41, 42) à laquelle il est ou ils sont connectés.

3. Réseau de communication optique passif (10) selon l'une des revendications 1 ou 2, dans lequel le nombre de commutateur(s) (51) relié(s) en entrée au premier terminal de ligne optique (21) par la voie principale (11) et au second terminal (22) de ligne optique par la voie secondaire (12), est identique au nombre de commutateur(s) (52) relié(s) en entrée au second terminal de ligne optique (22) par la voie principale (11) et au premier terminal de ligne optique (21) par la voie secondaire (12).

4. Réseau de communication optique passif (10) selon l'une des revendications 1 à 3, dans lequel les terminaux de ligne optique (21, 22) sont en liaison de communication l'un avec l'autre de sorte que chaque terminal de ligne optique (21, 22) puisse identifier toute défaillance de l'autre terminal de ligne optique (21, 22).

5. Réseau de communication optique passif (10) selon l'une des revendications 1 à 4, dans lequel chaque commutateur (51, 52) est relié à au moins deux unités de réseau optique (41, 42, 43, 44) par le biais d'un coupleur.

6. Aéronef dans lequel est embarqué un réseau de communication optique passif (10) selon l'une des revendications 1 à 5, ledit aéronef comportant un système d'informations doté de plusieurs serveurs informatiques fonctionnant par paires, les serveurs de chaque paire étant respectivement associés à l'un des terminaux de ligne optique (21, 22) dudit réseau de communication optique passif.

## Patentansprüche

1. Passives optisches Kommunikationsnetzwerk (10), das so eingerichtet ist, dass es in ein Transportmittel eingebaut werden kann, und das zur Übertragung von Daten an Benutzergeräte (61, 62, 63, 64) in einer Downlink-Datenstromrichtung bestimmt ist, umfassend:
- ein erstes und ein zweites optisches Leitungsende (21, 22), die jeweils dazu bestimmt sind, ein gleiches Kommunikationssignal, das sogenannte eingehende Kommunikationssignal, von verschiedenen Informationssystemen (31, 32, 33), die eine gleiche Information liefern können, zu empfangen, wobei das erste und das zweite Leitungsende jeweils so eingerichtet sind, dass sie das empfangene Kommunikationssignal in ein gleiches optisches Signal mit der Wellenlänge λ₁ , das sogenannte eingehende optische Signal, umwandeln,
- mindestens zwei Schalter (51, 52),
wobei das erste optische Leitungsende (21) über eine erste Glasfaser (81) mit den mindestens zwei Schaltern (51, 52) gekoppelt ist, und das zweite Leitungsende (22) über eine zweite Glasfaser (82) mit den mindestens zwei Schaltern (51, 52) gekoppelt ist,
wobei ein Teil der Schalter (51) am Eingang über einen Hauptkanal (11) über die erste Glasfaser (81) mit dem ersten optischen Leitungsende (21) und über einen Sekundärkanal (12) über die zweite Glasfaser (82) mit dem zweiten optischen Leitungsende (22) verbunden ist, wobei der andere Teil der Schalter (52) am Eingang über einen Hauptkanal (11) über die zweite Glasfaser (82) mit dem zweiten optischen Leitungsende (22) und über einen Sekundärkanal (12) über die erste Glasfaser (81) mit dem ersten optischen Leitungsende (21) verbunden ist,
wobei jeder Schalter (51, 52) am Ausgang mit mindestens einer optischen Netzwerkeinheit (41, 42) verbunden ist,
- mindestens zwei optische Netzwerkeinheiten (41, 43), wobei jede optische Netzwerkeinheit so eingerichtet ist, dass sie das empfangene optische Eingangssignal mit der Wellenlänge λ₁ wieder in das eingehende Kommunikationssignal umwandelt, und dazu bestimmt ist, es an Benutzergeräte (61, 62, 63, 64) zu übertragen,
- ein Kontroll- und Steuermodul (70), das mit den mindestens zwei Schaltern (51, 52) verbunden und so eingerichtet ist, dass es die mindestens zwei Schalter (51, 52) steuert,
Das passive optische Kommunikationsnetzwerk ist so eingerichtet, dass:
- im Normalbetrieb jeder Schalter (51, 52) im Hauptkanal und im Nebenkanal das gleiche eingehende optische Signal mit der Wellenlänge λ₁ empfängt, und jeder Schalter (51, 52) so eingerichtet ist, dass er das eingehende optische Signal von dem Hauptkanal an die mindestens eine optische Netzwerkeinheit, mit der er verbunden ist, adressiert,
- bei einem Ausfall, der die Übertragung des eingehenden optischen Signals über die erste Glasfaser (81) unterbricht, das Kontroll- und Steuermodul (70) so eingerichtet ist, dass es das Umschalten des oder der Schalter (51, 52) bewirkt, die so eingerichtet sind, dass sie das eingehende optische Signal, das über die erste Glasfaser (81) übertragen wird, von dem Hauptkanal (11) adressieren, damit der oder die Schalter (51, 52) das eingehende optische Signal, das vom Sekundärkanal (12) kommt, d. h. über die zweite Glasfaser (82) übertragen wird, an die mindestens eine optische Netzwerkeinheit (41, 42) adressiert, mit der er bzw. sie verbunden ist bzw. sind.

2. Passives optisches Kommunikationsnetzwerk (10) nach Anspruch 1, dass so eingerichtet ist, dass bei einem Ausfall, der die Übertragung des auf die zweite Glasfaser (82) eingehenden optischen Signals unterbricht, das Kontroll- und Steuermodul (70) so eingerichtet ist, dass es das Umschalten des oder der Schalter (51, 52) bewirkt, die so eingerichtet sind, dass sie das Signal, das über die zweite Glasfaser (82) übertragen wird, vom Hauptkanal (11) adressieren, damit der oder die Schalter (51, 52) das eingehende optische Signal, das von dem Sekundärkanal (12) kommt, d. h. über die erste Glasfaser (81) übertragen wird, an die mindestens eine optische Netzwerkeinheit (41, 42) addressieren, mit der er bzw. sie verbunden ist bzw. sind.

3. Passives optisches Kommunikationsnetzwerk (10) nach einem der Ansprüche 1 oder 2, wobei die Anzahl der Schalter (51), die am Eingang mit dem ersten optischen Leitungsende (21) über den Hauptkanal (11) und mit dem zweiten optischen Leitungsende (22) über den Sekundärkanal (12) verbunden sind, identisch ist mit der Anzahl der Schalter (52), die am Eingang mit dem zweiten optischen Leitungsende (22) über den Hauptkanal (11) und mit dem ersten optischen Leitungsende (21) über den Sekundärkanal (12) verbunden sind.

4. Passives optisches Kommunikationsnetzwerk (10) nach einem der Ansprüche 1 bis 3, wobei die optischen Leitungsenden (21, 22) miteinander kommunizieren, so dass jedes optische Leitungsende (21, 22) einen Ausfall des anderen optischen Leitungsendes (21, 22) identifizieren kann.

5. Passives optisches Kommunikationsnetzwerk (10) nach einem der Ansprüche 1 bis 4, wobei jeder Schalter (51, 52) über einen Koppler mit mindestens zwei optischen Netzwerkeinheiten (41, 42, 43, 44) verbunden ist.

6. Flugzeug, in dem ein passives optisches Kommunikationsnetzwerk (10) nach einem der Ansprüche 1 bis 5 eingebaut ist, wobei das Flugzeug ein Informationssystem mit mehreren paarweise arbeitenden Computerservern aufweist, wobei die Server jedes Paars jeweils mit einem der optischen Leitungsenden (21, 22) des passiven optischen Kommunikationsnetzwerkes verbunden sind.

## Claims

1. Passive optical communication network (10) configured to be carried on board a means of transport, and intended for the transmission of data towards user equipment (61, 62, 63, 64), in a so-called downlink flow direction, comprising:
- a first and a second optical line terminal (21, 22) respectively intended to receive the same communication signal, called input communication signal, from distinct information systems (31, 32, 33) which could deliver the same information, each of said first and second line terminals being configured to convert the received communication signal into a same optical signal, of wavelength λ₁, called input optical signal,
- at least two switches (51, 52),
The first optical line terminal (21) being coupled, via a first optical fibre (81), to the at least two switches (51, 52), and the second line terminal (22) being coupled, via a second optical fibre (82), to the at least two switches (51, 52),
one part of the switches (51) being connected, at the input to the first optical line terminal (21) by a so-called main route (11), via the first optical fibre (81), and to the second line terminal (22) by a so-called secondary route (12), via the second optical fibre (82),
the other part of the switches (52) being connected at the input to the second optical line terminal (22) via a so-called main route (11), via the second optical fibre (82), and to the first optical line terminal (21) via a so-called secondary route (12), via the first optical fibre (81),
each switch (51, 52) being connected at the output to at least one optical network unit (41, 42),
- at least two optical network units (41, 43), each optical network unit being configured to reconvert the received input optical signal, of wavelength λ1, into an input communication signal, and being intended to transmit it to user equipment (61, 62, 63, 64),
- a command-control module (70) connected to the at least two switches (51, 52), and configured to drive said at least two switches (51, 52),
The passive optical communication network being configured such that:
- In normal operation, each switch (51, 52) receives on the main route and on the secondary route, the same input optical signal, of wavelength λ₁, and each switch (51, 52) is configured to send the input optical signal originating from the main route to the at least one optical network unit to which it is connected,
- In the event of a failure breaking the transmission of the input optical signal on the first optical fibre (81), said command-control module (70) is configured to cause toggling of the switch(es) (51, 52) configured to send the input optical signal, transmitted by the first optical fibre (81), originating from the main route (11) so that said switch(es) (51, 52) send(s) the input optical signal originating from the secondary route (12), i.e. transmitted by the second optical fibre (82), to the at least one optical network unit (41, 42) to which it is or they are connected.

2. Passive optical communication network (10) according to claim 1, configured so that, in the event of a failure breaking the transmission of the input optical signal on the second optical fibre (82), said command-control module (70) is configured to cause toggling of the switch(es) (51, 52) configured to send the input optical signal transmitted by the second optical fibre (82) originating from the main route (11) so that said switch(es) (51, 52) send(s) the input optical signal originating from the secondary route (12), i.e. transmitted by the second optical fibre (82), to the at least one optical network unit (41, 42) to which it is or they are connected.

3. Passive optical communication network (10) according to one of claims 1 or 2, wherein the number of switch(es) (51) connected at the input to the first optical line terminal (21) via the main route (11) and to the second optical line terminal (22) via the secondary route (12), is identical to the number of switch(es) (52) connected at the input to the second optical line terminal (22) via the main route (11) and to the first optical line terminal (21) via the secondary route (12).

4. Passive optical communication network (10) according to one of claims 1 to 3, wherein the optical line terminals (21, 22) are connected to communicate with each other so that each optical line terminal (21, 22) could identify any failure of the other optical line terminal (21, 22).

5. Passive optical communication network (10) according to one of claims 1 to 4, wherein each switch (51, 52) is connected to at least two optical network units (41, 42, 43, 44) via a coupler.

6. Aircraft in which is a passive optical communication network (10) according to one of claims 1 to 5 is embedded, said aircraft including an information system provided with several computer servers operating in pairs, the servers of each pair being respectively associated with one of the optical line terminals (21, 22) of said passive optical communication network.
